# EUROPÄISCHE PATENTANMELDUNG

(11) **EP 4 613 621 A1**
(43) Veröffentlichungstag der Anmeldung: **10.09.2025**
(21) Anmeldenummer: 25162497.9
(22) Anmeldetag: 10.03.2025
(51) Int. Cl.: B62K 21/10

(54) **LENKSTABILISIERUNGSSYSTEM FÜR FAHRRADLENKER**

(30) Priorität: 08.03.2024 DE 202024101154 U
(71) Anmelder: Canyon Bicycles GmbH, 56073 Koblenz (DE)
(72) Erfinder: Thumm, Johannes, 79539 Lörrach (DE)
(74) Vertreter: dompatent von Kreisler Selting Werner - Partnerschaft von Patent- und Rechtsanwälten mbB

(57) **Zusammenfassung**

Ein Lenkstabilisierungssystem für Fahrradlenker weist einen innerhalb eines Steuerrohrs (24) schwenkbar gelagerten Gabelschaft (30) auf. Mit dem Gabelschaft (30) ist eine erste Magneteinrichtung (20) drehfest verbunden. Eine zweite Magneteinrichtung (18) ist drehfest mit dem Steuerrohr (24) verbunden. Die beiden Magneteinrichtungen (18, 20) weisen zumindest einen diametral magnetisierten Ringmagnet auf und sind derart zueinander angeordnet, dass beim Drehen des Gabelschafts (30) aus einer Ruheposition ein Rückstellmoment entsteht.

## Beschreibung

Die Erfindung betrifft ein Lenkstabilisierungssystem für Fahrradlenker.

Zur Verbesserung der Fahreigenschaften eines Fahrrads und insbesondere um äußere Einflüsse, wie Unebenheiten und dergleichen auf die Lenkung zu verringern, ist es bekannt Lenkstabilisierungssysteme vorzusehen. Derartige Systeme sind beispielsweise in DE 10 2021 006 577, DE 10 2021 005 463 und DE 10 2021 006 508 beschrieben. Derartige bekannte Lenkstabilisierungssysteme weisen insbesondere zwei im Oberrohr des Fahrradrahmens angeordnete Federn auf, die jeweils über ein Band mit einem am Gabelschaft fixierten Nockenring verbunden sind. Durch das Einschlagen des Lenkers wird somit eine der Federn gespannt und ein Rückstellmoment erzeugt. Durch das Rückstellmoment wird der Lenker in die Ausgangs- bzw. Ruheposition zurückbewegt. Bei der Ruheposition handelt es sich um die Position, in der der Lenker in Geradeausfahrt steht.

Bekannte Lenkstabilisierungssysteme weisen jedoch den Nachteil auf, dass diese einen relativ großen Platzbedarf haben. Insofern ist der Einsatz bekannter Lenkstabilisierungssysteme in schmalen Rahmen, die insbesondere ein Oberrohr mit geringen Außenabmessungen aufweisen, nicht möglich. Andererseits wäre die Verwendung von Lenkstabilisierungssystemen auch bei derartigen Fahrrädern, wie insbesondere bei Rennrädern oder Zeitfahrrädern, wünschenswert. Ein weiteres Problem bekannter Lenkstabilisierungssysteme besteht darin, dass durch die Anordnung der Federn im Oberrohr das Verlegen von Zügen innerhalb der Rahmenrohre, insbesondere innerhalb des Oberrohrs, behindert ist und teilweise nicht realisiert werden kann.

Aufgabe der Erfindung ist es ein Lenkstabilisierungssystem für Fahrradlenker zu schaffen, das einen geringen Platzbedarf aufweist.

Die Lösung der Aufgabe erfolgt erfindungsgemäß durch ein Lenkstabilisierungssystem mit den Merkmalen des Anspruchs 1.

Das erfindungsgemäße Lenkstabilisierungssystem für einen Fahrradlenker weist einen Gabelschaft auf, der schwenkbar in einem Steuerrohr gelagert ist. Insbesondere erfolgt die schwenkbare Lagerung des Gabelschafts am Steuerrohr durch ein oberes und ein unteres Lagerelement. Mit dem Gabelschaft ist eine erste Magneteinrichtung drehfest verbunden. Hierbei kann die erste Magneteinrichtung mittelbar oder unmittelbar drehfest mit dem Gabelschaft verbunden sein. Beispielsweise könnte die erste Magneteinrichtung auch im Bereich der Gabelbrücke oder im Bereich eines Vorbaus angeordnet sein. Eine zweite Magneteinrichtung ist drehfest mit dem Steuerrohr verbunden. Auch hier ist eine mittelbare Verbindung mit dem Steuerrohr möglich, sodass das zweite Magnetelement auch mit einem anderen Rahmenelement, wie einem Unterrohr oder einem Oberrohr verbunden sein kann. Jede Magneteinrichtung weist zumindest einen diametral magnetisierten Ringmagneten auf. Ferner sind die Magneteinrichtungen derart zueinander angeordnet, dass beim Drehen des Gabelschaftes aus einer Ruheposition, d.h. beim Einschlagen des Lenkers aus einer Geradeausfahrt, ein Rückstellmoment entsteht. Das Rückstellmoment entsteht aufgrund des Verdrehens der beiden Magneteinrichtungen zueinander.

Durch das erfindungsgemäße Vorsehen zweier derartiger Magneteinrichtungen ist es möglich ein Lenkstabilisierungssystem zu schaffen, das nur einen sehr geringen Platzbedarf aufweist. Das Verwenden von Magneteinrichtungen hat ferner den Vorteil, dass diese keinem oder zumindest einem geringeren Alterungsprozess als Federn unterliegen. Auch ist es durch das Vorsehen von Magneteinrichtungen möglich ein berührungsloses Lenkstabilisierungssystem zu realisieren, sodass kein Verschleiß auftritt und negative Einflüsse durch Reibung oder dergleichen vermieden sind.

Vorzugsweise weisen die beiden Magneteinrichtungen Permanentmagnete auf, wobei es besonders bevorzugt ist, dass ausschließlich Permanentmagnete vorgesehen sind. Alternativ kann auch eine oder beide Magneteinrichtungen zumindest einen Elektromagneten aufweisen. Durch das Vorsehen eines Elektromagneten ist es möglich auf einfache Weise das Lenkstabilisierungssystem an- oder auszuschalten. Dafür ist es beim Vorsehen eines Elektromagneten erforderlich den Elektromagneten mit einer Energiequelle, wie beispielsweise dem Akku eines E-Bikes, zu verbinden. Zusätzlich zum Ein-/ Ausschalter kann auch eine Steuereinrichtung vorgesehen sein. Mit Hilfe der Steuereinrichtung könnte beispielsweise ein automatisches Ein- und Ausschalten des Lenkstabilisierungssystems, je nach Fahrsituation, wie die Geschwindigkeit, unebener Untergrund etc. erfolgen.

Die Ringmagnete sind vorzugsweise mehrpolig, insbesondere vierpolig ausgebildet. Je nach Anzahl der Polpaare wird ein maximales Drehmoment bzw. Rückstellmoment bei einem anderen Drehwinkel bzw. Einschlagwinkel des Lenkers erzeugt. Bei der Verwendung von Ringmagneten mit einem Polpaar, d.h. einem Ringmagneten, bei der ein halber Ring als Nordpol und ein halber Ring als Südpol ausgebildet ist, ist das maximale Drehmoment bei einem Drehwinkel bzw. Lenkwinkel von 90° erreicht. Bei Verwendung von vierpoligen Magneten, d.h. von Ringmagneten mit zwei Polpaaren ist das maximale Drehmoment bei einem Winkel von 45° erreicht. Übliche Lenkeinschläge liegen im Bereich von 75° bis 80°. Die Drehmoment-Kurve des Rückstellmoments entspricht einer abgeflachten Sinuskurve. Je nach verwendeter Bauform der Ringmagnete liegen die Maxima der Kurve bei ca. 15° und 75°. Ein starkes Absinken des den Lenker rückstellenden Drehmoments erfolgt erst ab ca. 80°, d.h. in einem Bereich, in dem der Lenker üblicherweise nicht eingeschlagen wird. Durch Vorsehen eines Lenkanschlags kann verhindert werden, dass der Lenker in einem Bereich gelenkt wird, in dem das Rückstelldrehmoment negativ würde. Ein entsprechender Lenkanschlag könnte beispielsweise auch durch einen Formschluss direkt in das erfindungsgemäße Lenkstabilisierungssystem integriert werden.

Ferner ist es möglich einzelne oder alle der verwendeten Ringmagneten als Magnet-Arrays aus einzelnen Segmentmagneten auszubilden. Besonders bevorzugt ist hierbei die Verwendung eines Halbach-Arrays.

Die beiden Magneteinrichtungen können an unterschiedlichen Bereichen des Fahrrads angeordnet sein. Besonders bevorzugt ist es, dass die erste und/oder die zweite Magneteinrichtung innerhalb des Steuerrohrs angeordnet ist. Besonders bevorzugt ist es, dass beide Magneteinrichtungen innerhalb des Steuerrohrs angeordnet sind. Hierbei ist es wiederum bevorzugt, dass die beiden Magneteinrichtungen im unteren Bereich, d.h. nahe des unteren Lagers, angeordnet sind. Dies hat den Vorteil, dass auf einfache Weise Züge, ausgehend vom Lenker, ggf. über einen Vorbau in den Gabelschaft bzw. das Steuerrohr eingeführt und von dort im Oberrohr verlegt werden können. Auch ist es hierdurch möglich auf einfache Weise Züge zwischen dem oberen Steuerlager und dem Gabelschaft ins Steuerrohr einzuführen und sodann im Unterrohr anzuordnen.

Die Ringmagnete der beiden Magneteinrichtungen können axial zueinander angeordnet sein. Insbesondere sind die Ringelemente zueinander koaxial angeordnet. Besonders bevorzugt ist es, dass die Ringmagnete den Gabelschaft umgeben und in axialer Richtung des Gabelschafts übereinander angeordnet sind. Hierbei kann der mindestens eine Ringmagnet der ersten Magneteinrichtung auf einfache Weise beispielsweise durch Verklemmen, Verkleben oder andere Fixiermöglichkeiten drehfest mit dem Gabelschaft verbunden werden. Der mindestens eine Ringmagnet der zweiten Magneteinrichtung könnte ebenso durch Klemmen oder Verkleben an der Innenseite des Steuerrohrs fixiert sein. Bevorzugt ist hierbei jedoch eine lösbare Fixierung mit Hilfe eines Halteelements oder dergleichen. Hierdurch ist die Montage vereinfacht. Bevorzugt ist es, dass ein derartiges Halteelement von außen lösbar, bzw. fixierbar ist.

Ebenso ist es möglich, dass die Ringmagneten radial zueinander angeordnet sind. Hierbei ist es wiederum bevorzugt, dass die Ringmagneten zueinander koaxial angeordnet sind, wobei ein äußerer Ringmagnet einen inneren Ringmagnet umgibt. Vorzugsweise umgeben die Ringmagneten wiederum den Gabelschaft. Bei dieser Ausführungsform ist der innere Ringmagnet Teil der ersten Magneteinrichtung oder bildet diese aus und ist mit dem Gabelschaft wiederum beispielsweise durch Kleben, Verklemmen oder dergleichen drehfest verbunden. Der äußere Ringmagnet ist Bestandteil der zweiten Magneteinrichtung oder bildet diese aus. Der äußere Ringmagnet ist sodann insbesondere über ein lösbares Halteelement mit dem Steuerrohr drehfest verbunden.

In einer weiteren bevorzugten Ausführungsform kann das Rückstellmoment verändert werden. Bei Verwendung eines Elektromagneten ist dies durch Variieren der Magnetstärke des Elektromagneten möglich. Bei Verwendung von Permanentmagneten kann die Größe des Rückstellmoments durch Verändern der Lage der Magneteinrichtungen zueinander variiert werden. Insbesondere sind die beiden Magneteinrichtungen oder Teile einzelner Magneteinrichtungen zueinander verschiebbar. Bei axial angeordneten Ringmagneten kann durch Veränderungen des Luftspalts zwischen benachbarten Ringmagneten das maximale Rückstellmoment verändert werden. Bei radial angeordneten Ringmagneten kann eine Veränderung des Rückstellmoments durch Verändern der Eingriffstiefe der beiden Ringmagneten variiert werden. Bevorzugt ist es insbesondere, dass die mittelbar oder unmittelbar am Steuerrohr angeordnete Magneteinrichtung verschiebbar ist. Dies kann insbesondere mit Hilfe des Halteelements erfolgen, das zum Befestigen der zweiten Magneteinrichtung am Steuerrohr oder an einem anderen Rahmenelement vorgesehen ist. Der Verlauf der Drehmomentkurve kann beispielsweise auch durch Verwendung unterschiedlicher Materialstärken der Magnete verändert werden. Beim Vorsehen von Magnet-Arrays ist dies durch die Positionierung und Polrichtung der einzelnen Segmentmagnete möglich.

Bei einer weiteren bevorzugten Ausführungsform ist es möglich, dass Lenkstabilisierungssystem zu deaktivieren. Bei Verwenden mindestens eines Elektromagneten ist dieses durch einfaches Ausschalten möglich. Bei Verwenden von Permanentmagneten kann ein deaktivieren beispielsweise dadurch erfolgen, dass die Verbindung der zweiten Magneteinrichtung zum Steuerrohr oder einem anderen Rahmenelement gelöst wird und sich somit die zweite Magneteinrichtung mit dreht. Ein entsprechendes Lösen der Verbindung erfolgt vorzugsweise werkzeuglos oder mit einfachen Werkzeugen, wie einen Inbusschlüssel oder dergleichen.

Nachfolgend wird die Erfindung anhand einer bevorzugten Ausführungsform unter Bezugnahme auf die anliegenden Zeichnungen näher erläutert.

Es zeigen:
- Figur 1: eine schematische perspektivische Ansicht axial zueinander angeordneter Magneteinrichtungen,
- Figur 2: eine schematische perspektivische Ansicht radial zueinander angeordneter Magneteinrichtungen und
- Figur 3: eine schematische Schnittansicht eines erfindungsgemäßen Lenkstabilisierungssystems.

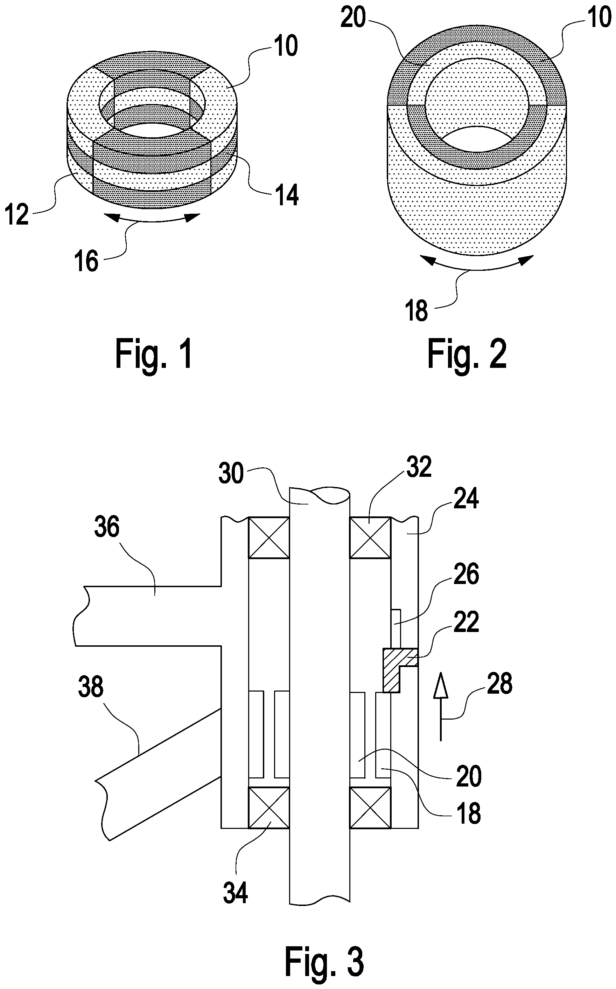

Bei der in Figur 1 dargestellten Ausführungsform weist eine erste Magneteinrichtung zwei Ringmagneten 10, 12 mit jeweils zwei Polpaaren auf, die durch unterschiedliche Schraffierungen dargestellt sind. Zwischen den beiden die erste Magneteinrichtung ausbildenden Ringmagneten ist ein weiterer Ringmagnet 14 angeordnet, der die zweite Magneteinrichtung ausbildet. Auch der Ringmagnet 14 ist vierpolig ausgebildet. Eine der beiden Magneteinrichtungen, insbesondere die erste Magneteinrichtung, ist am Gabelschaft angeordnet, insbesondere durch Verkleben oder Verklemmen drehfest mit dem Gabelschaft verbunden. Die zweite Magneteinrichtung 14 ist am Steuerrohr gehalten, insbesondere drehfest verbunden. Durch Drehen der beiden mit dem Gabelschaft verbundenen Ringmagneten 10, 12 in Richtung eines Pfeils 16 werden die Ringmagnete 10, 12, 14 aus ihrer Ruheposition gedreht, sodass ein Rückstellmoment erzeugt wird. Dieses Rückstellmoment bewirkt ein Zurückdrehen des Gabelschafts und somit des Lenkers in die Ruheposition, bzw. ein Unterstützen dieser Drehbewegung.

Entsprechend ist in Figur 2 ein System mit radial angeordneten Ringmagneten 18, 20 dargestellt. Hierbei bildet der innere Ringmagnet 20 die erste Magneteinrichtung aus, die mit einem Gabelschaft drehfest verbunden ist. Die zweite Magneteinrichtung ist durch den äußeren Ringmagneten 18 ausgebildet, der mit dem Steuerrohr drehfest verbunden ist. Ein Drehen des Gabelschafts und somit des mit dem Gabelschaft verbundenen inneren Ringmagneten 20 in Richtung des Pfeils 16 bewirkt wieder das Erzeugen eines Rückstellmoments.

Bei der in Figur 3 dargestellten Ausführungsform der Erfindung ist die in Figur 2 dargestellte Ausführungsform der Magneteinrichtungen 18, 20 in eingebautem Zustand dargestellt. Der äußere Ringmagnet 18, der im dargestellten Ausführungsbeispiel die zweite Magneteinrichtung ausbildet, ist über ein Halteelement 22 mit dem Steuerrohr 24 drehfest verbunden. Das Halteelement 22 ist mit dem Magnetring 18 fest verbunden und in einer an der Innenseite des Steuerrohrs 24 vorgesehen Nut 26 angeordnet, bzw. greift in die Nut 26 ein. Durch eine nach außen führende Öffnung im Steuerrohr 24 ist das Halteelement von außen zugänglich und beispielsweise durch ein Klemmelement, wie eine Madenschraube, fixierbar. Zur Einstellung des maximal erzeugbaren Rückstellmoments kann der äußere Ringmagnet 18 in Richtung eines Pfeils 28 in Figur 3 nach oben verschoben werden, sodass sich die Eingrifftiefe der beiden Ringmagneten 18, 20 ändert.

Innerhalb des Steuerrohrs 24 ist ein Gabelschaft 30 über ein oberes Lagerelement 32 und ein unteres Lagerelement 34 schwenkbar gelagert. Mit dem Steuerrohr 34 ist, wie schematisch dargestellt, ferner ein Oberrohr 36 sowie ein Unterrohr 38 verbunden.

Innerhalb des Steuerrohrs 24 ist der innere Ringmagnet 20 angeordnet und drehfest mit dem Gabelschaft 30 verbunden. Dies kann beispielsweise mit Hilfe einer klemmenden Verbindung durch Verkleben oder andere Arten der Verbindung erfolgen. In dem in Figur 3 dargestellten Ausführungsbeispiel sind die beiden Magneteinrichtungen 18, 20, die durch die beiden Ringmagneten 18, 20 im dargestellten Ausführungsbeispiel ausgebildet sind, in einem unteren Bereich des Steuerrohrs 24, d.h. nahe des unteren Lagerelements 34 angeordnet. Dies hat den Vorteil, dass Kabelzüge, die beispielsweise vom Lenker kommen, auf einfache Weise innerhalb des Oberrohrs verlegt werden können.

## Patentansprüche

1. Lenkstabilisierungssystem für Fahrradlenker, mit
einem Steuerrohr (24)
einem im Steuerrohr (24) schwenkbar gelagerten Gabelschaft (30),
einer mit dem Gabelschaft (30) drehfest verbundenen ersten Magneteinrichtung (20),
einer mit dem Steuerrohr (24) drehfest verbundenen zweiten Magneteinrichtung (18),
wobei jede Magneteinrichtung (18, 20) zumindest einen diametral magnetisierten Ringmagnet aufweist und die Magneteinrichtungen (18, 20) derart zueinander angeordnet sind, dass beim Drehen des Gabelschafts (30) aus einer Ruheposition ein Rückstellmoment entsteht.

2. Lenkstabilisierungssystem für Fahrradlenker nach Anspruch 1, **dadurch gekennzeichnet, dass** beide Magneteinrichtungen (18, 20) Permanentmagnete aufweisen.

3. Lenkstabilisierungssystem für Fahrradlenker nach Anspruch 1, **dadurch gekennzeichnet, dass** eine oder beide Magneteinrichtungen (18, 20) mindestens einen Elektromagneten aufweisen.

4. Lenkstabilisierungssystem für Fahrradlenker nach Anspruch 1 bis 3, **dadurch gekennzeichnet, dass** die Ringmagnete (10, 12, 14; 18, 20) mehrpolig, insbesondere vierpolig ausgebildet sind.

5. Lenkstabilisierungssystem für Fahrradlenker nach Anspruch 1 bis 4, **dadurch gekennzeichnet, dass** die Ringmagnete als Magnet-Array aus einzelnen Segmentmagneten ausgebildet sind.

6. Lenkstabilisierungssystem für Fahrradlenker nach Anspruch 1 bis 5, **dadurch gekennzeichnet, dass** die erste und/oder die zweite Magneteinrichtung (18, 20) innerhalb des Steuerrohrs (24) angeordnet sind.

7. Lenkstabilisierungssystem für Fahrradlenker nach Anspruch 1 bis 6, **dadurch gekennzeichnet, dass** die Ringmagnete (10, 12, 14; 18, 20) axial zueinander angeordnet sind, insbesondere den Gabelschaft (30) umgeben.

8. Lenkstabilisierungssystem für Fahrradlenker nach Anspruch 1 bis 6, **dadurch gekennzeichnet, dass** die Ringmagnete (18, 20) radial angeordnet sind, insbesondere den Gabelschaft (30) umgeben.

9. Lenkstabilisierungssystem für Fahrradlenker nach Anspruch 1 bis 8, **dadurch gekennzeichnet, dass** zur Veränderung des Rückstellmoments die Magneteinrichtungen (18, 20) zueinander verschiebbar sind.

10. Lenkstabilisierungssystem für Fahrradlenker nach Anspruch 1 bis 9, **dadurch gekennzeichnet, dass** die Verbindung zwischen der zweiten Magneteinrichtung (18) und dem Steuerrohr (24) lösbar ist.
